# EUROPÄISCHE PATENTSCHRIFT

(11) **EP 0 907 443 B1**
(45) Veröffentlichungstag und Bekanntmachung des Hinweises auf die Patenterteilung: **29.11.2000**
(21) Anmeldenummer: 97925951.2
(22) Anmeldetag: 27.05.1997
(51) Int. Cl.: B22F 3/105

(54) **VERFAHREN ZUR HERSTELLUNG VON FLÄCHENHAFTEN WERKSTOFFVERBUNDEN**
METHOD OF PRODUCING LAMINAR MATERIAL COMPOSITES
PROCEDE DE PRODUCTION DE MATERIAUX COMPOSITES LAMINAIRES

(30) Priorität: 01.06.1996 DE 19621977
(43) Veröffentlichungstag der Anmeldung: 14.04.1999
(73) Patentinhaber: KS Gleitlager GmbH, 68789 St. Leon-Rot (DE)
(72) Erfinder: Wüllenweber, Heinz, 60599 Frankfurt (DE); Laudenklos, Manfred, 61137 Schöneck 2 (DE)
(74) Vertreter: Dreiss, Fuhlendorf, Steimle & Becker, Patentanwälte
(86) Internationale Anmeldenummer: EP9702726
(87) Internationale Veröffentlichungsnummer: WO9746345

(56) Entgegenhaltungen:
- EP-A- 0 116 365
- DE-A- 3 015 981
- US-A- 2 247 370
- US-A- 5 389 408

## Beschreibung

Die Erfindung bezieht sich auf ein Verfahren zur Herstellung von flächenhaften Werkstoffverbunden, wie Bändern, Folien oder Tafeln aus einem Trägermaterial und wenigstens einer darauf vorgesehenen und ggf. verdichteten elektrisch leitenden Pulverschicht oder aus einem elektrisch leitenden flächenhaften Pulverformkörper ohne Trägerschicht, wobei das Trägermaterial und die Pulverschicht bzw. der Pulverformkörper einem magnetischen Wechselfeld im Frequenzbereich von etwa 10 kHz bis 120 MHz ausgesetzt werden, um in der Pulverschicht bzw. dem Pulverformkörper einen Induktionsstrom solcher Energiedichte zu erzeugen, daß die Berührungsstellen der Pulverpartikel untereinander und, bei Vorhandensein eines Trägermaterials, auch ihre Berührungsstellen mit dem Trägermaterial bei einer Temperatur oberhalb der Sintertemperatur schmelzflüssig und verbunden werden.

Das Pulver soll also zumindest teilweise aus elektrisch leitfähigen Werkstoffkomponenten bestehen, so daß durch Induktion ein elektrischer Strom induziert werden kann. Dabei ist es gleichgültig, welche Struktur das Pulver hat, ob es kugelig, sprautzig, faserförmig oder wie auch immer gestaltet ist.

Die Erfindung ist bspw. auf die Herstellung von solchen flächenhaften Werkstoffverbunden gerichtet, welche in großem Umfang als Elektroden in Elektrolyseuren, Batterien oder Brennstoffzellen oder als katalytisch wirksame Elemente in chemischen Prozessen Verwendung finden, deren Pulverschichten häufig eine oder mehrere Komponenten enthalten, welche bei höherer Temperatur thermisch geschädigt werden können und an welche hohe Ansprüche hinsichtlich des Zusammenhalts des Werkstoffverbundes gestellt werden, vor allem dann, wenn im Betrieb innerhalb der z.B. porösen Struktur Gase erzeugt werden, welche auf die Struktur erhebliche Kräfte ausüben, welche zum Absprengen der Beschichtung führen können. Die Erfindung bezieht sich bspw. auch auf die Herstellung von flächenhaften Werkstoffverbunden aus porösen Pulverschichten mit und ohne Träger für die Anwendung als Filter, Filterträger Katalysator, Katalysatorträger, Diaphragma oder Membran und als Gleitlager, bei denen die Poren mit Stoffen gefüllt werden, welche das Verhalten, z.B. das Gleitverhalten, der Lager, verbessern. Die Erfindung bezieht sich ferner bspw. auf die Herstellung von Lötverbindungen, welche durch das Aneinanderschmelzen der zu verbindenden Teile zu einer höheren Festigkeit der Werkstoffverbunde führen, auch auf die Herstellung von Pulverschichten, bei welchen hochschmelzende Partikel in eine niedrig schmelzende Umgebung eingebettet werden, sowie auch auf die Fixierung von elektrisch leitenden Schichten, welche nach Methoden aus der Papier-, Folien- und Vliesherstellung hergestellt werden.

Bei einem aus der DE 38 13 744 A1 bekannten Verfahren, mit welchem die Pulverkörner von Pulverschichten untereinander und bei Vorhandensein eines Trägermaterials die Pulverkörner an dem Träger fixiert werden, erfolgt die Fixierung durch Sinterung in reduzierender Atmosphäre, also durch einen Diffusionsvorgang an den Berührungsstellen der Pulverkörner bei einer Temperatur, welche bei Metall-Einstoffsystemen bspw. in der Größenordnung von 2/3 bis 4/5 der absoluten Schmelztemperatur, in allen Fällen hochschmelzender Komponenten von Pulvergemischen erheblich unterhalb der absoluten Schmelztemperatur liegt. Dies gilt auch für ein aus der DE 30 15 981 A1 bekanntes Verfahren zur Herstellung hochporöser Sinterelektroden für elektrische Akkumulatoren, bei welchen Metallpartikel bei hoher Temperatur zu einem porösen Gerüst auf ein Bandträger zusammengesintert werden, wobei das pulverbeschichtete Trägerband, statt einer Strahlungsheizung einer kurzzeitigen induktiven Erhitzung im Magnetfeld auf Sintertemperatur unterzogen wird. Aus der EP 0 274 673 B1 ist ebenfalls ein Verfahren bekannt, bei welchem eine Pulverschicht in sich und ihre Berührungsstellen zu einem Trägermaterial durch Sintern der Teile mittels Induktion im magnetischen Wechselfeld fixiert werden.

Die bekannten Sinterverfahren sind zeitaufwendig und kostenintensiv und können aufgrund der langen Sinterzeit die Struktur bzw. Eigenschaft des verwendeten Pulvers beeinträchtigen. Da die Pulverschichten in sich und mit dem Trägermaterial nur durch Sintern der Berührungsstellen miteinander verbunden werden, erfolgt ein relativ schwacher Zusammenhalt der Pulverschichten und insbesondere eine nur begrenzte Haftung der Pulverschichten auf dem Trägermaterial. Nachteilig bei den bekannten Verfahren ist ebenso, daß die gesamte Masse von Pulverschichten und Trägermaterial auf Sintertemperatur gebracht und über Minuten bei dieser Temperatur gehalten werden muß. Damit kann das Risiko der thermischen Schädigung von temperaturempfindlichen Pulverkomponenten nicht ausgeschlossen werden.

Aus der US-A-5 389 408 ist ein Verfahren zur Behandlung von Metallpartikeln bekannt, welche in einem vorgegebenen Muster auf einem nicht-metallischem Träger abgelagert sind, um kontinuierlich Metalleiter in Form dieses Musters zu erzeugen. Zu diesem Zweck wird hinreichende elektromagnetische Energie gleichmäßig auf die Teilchen aufgebracht, um wenigstens einige von ihnen zu schmelzen. Dabei wird die Temperatur der Teilchen während der Aufbringung der elektromagnetischen Energie beobachtet und das elektromagnetische Feld abgeschaltet, wenn die Temperatur einen vorgegebenen Wert erreicht. Bei diesem Verfahren wird ein erheblicher Zeitaufwand von mehreren Sekunden benötigt, um die schmelzfähigen Teilchen zu schmelzen, damit diese eine fließfähige Metallschmelze bilden, aus welcher beim Erstarren die angestrebten kontinuierlichen homogenen Metalleiterbahnen entstehen.

Aufgabe der vorliegenden Erfindung ist es, ein Verfahren zur Herstellung von flächenhaften Werkstoffverbunden der eingangs genannten Art vorzuschlagen, welches schnell, kostengünstig und strukturerhaltend für das Pulver ist. Außerdem soll eine gute Verklammerung selbsttragender Pulverschichten in sich und bei Vorhandensein eines Trägermaterials eine gute Haftung der Pulverschicht auf dem Trägermaterial sichergestellt werden.

Auf diese Weise wird eine langwierige und strukturverändernde Sinter-Wärmebehandlung vermieden. Das erfindungsgemäße Verfahren ist unabhängig davon wie das Pulver auf das Trägermaterial appliziert wird und in welcher Dicke die Pulverschicht bzw. verschiedene Pulverschichten vorliegen. Bedingung ist lediglich, daß das Pulver elektrisch leitfähige Partikeln enthält, damit ein elektrischer Strom induziert werden kann. Dies wird im wesentlichen dadurch erreicht, daß schmelzflüssige Partikeloberflächen bei einer Temperatur oberhalb der Sintertemperatur erzeugt werden, und zwar bei Induktionsströmen solcher Energiedichte und so kurzzeitig, daß ein möglichst hoher Temperaturgradient zum Kern der Pulverkörner besteht, so daß die Kerntemperatur bei einer Partikelgröße oberhalb einer Mindestgröße im Mikrometerbereich unterhalb der Sintertemperatur liegt. Das Verfahren läuft also bewußt bei Schmelztemperatur, also erheblich oberhalb der Sintertemperatur an den Berührungsstellen der Pulverpartikel ab. Durch die Art und die äußerste Kürze des Schweißvorganges entsteht ein fester Werkstoffverbund mit der Überlegenheit hinsichtlich mechanischer Werte, die eine Schweißverbindung gegenüber einer Sinterverbindung hat, ohne daß die Porosität und die Formbeständigkeit des Werkstoffverbundes durch die gegenüber der Sintertemperatur höhere Schweißtemperatur beeinträchtigt wird. Der hohe Temperaturunterschied zwischen aufgeschmolzenen Partikelrandzonen und den Partikelkernzonen kann dadurch sichergestellt werden, daß die Partikelgröße oberhalb einer Mindestgröße im Mikrometerbereich liegt.

Die technologischen Vorteile des erfindungsgemäßen Verfahrens sind folgende:

Durch das Verschweißen der Pulverpartikel untereinander und ggf. mit einem Trägermaterial entsteht ein Produkt höherer Festigkeit, besserer Verarbeitbarkeit und vor allem besserer Haftung der Pulverschicht auf dem Trägermaterial, als dies durch einen Sinterprozeß möglich ist. Tempera-turempfindliche Pulverkomponenten, welche bei höheren Temperaturen thermisch geschädigt werden, behalten aufgrund der niedrigen Kerntemperatur der Pulverpartikel wesentlich besser ihre Eigenschaften bei, was durch eine hinreichende Partikelgröße gewährleistet werden kann. Der Wert der zu wählenden Mindestgröße der Pulverpartikel hängt von deren Korngestalt und deren Materialeigenschaften ab. Die Aktivität von Raney-Nickel-Pulver bspw., das als katalytisch wirksame Pulverkomponente in Elektroden-Beschichtungen häufig verwendet wird, bleibt bei dem erfindungsgemäßen Verfahren wesentlich besser erhalten. Zu diesen technologischen Vorteilen kommt der Vorteil der geringeren Produktherstellungskosten gegenüber den bekannten Sinterverfahren, da das Produkt nicht mehr zeit- und kostenaufwendig den Diffusionsprozeß des Sinterns in einer Schutzgasatmosphäre durchlaufen muß, sondern innerhalb des Bruchteils einer Sekunde und in den meisten Fällen sogar ohne Schutzgas induktiv geschweißt werden kann.

Bei der Herstellung von Werkstoffverbunden als Bandmaterial ist es bspw. möglich, den erfindungsgemäßen Schweißvorgang infolge seiner zeitlichen Kürze kostengünstig in eine Fertigungslinie mit den übrigen Verarbeitungsschritten einzugliedern, während das für den Sintervorgang, weil hierfür mit einem sehr langen und entsprechend teuren Sinterofen gearbeitet werden muß, nur mit erheblichem finanziellen Aufwand möglich ist, da die Sinterzeit gegenüber den übrigen Verarbeitungssschritten um ein Vielfaches länger ist.

Vorteilhaft bei dem erfindungsgemäßen Verfahren zur Herstellung von Werkstoffverbunden aus selbsttragenden oder auf Trägern fixierten, bspw. porösen Pulverschichten ist eine gute Verklammerung der Pulverschichten in sich und, bei Vorhandensein einer Trägerschicht, eine gute Haftung der Pulverschicht an der Trägerschicht. Eine thermische Schädigung von temperaturempfindlichen Pulverkomponenten und ggf. auch eines temperaturempfindlichen Trägers kann in vielen Fällen ausgeschlossen werden. Die Herstellungskosten des Produkts sind gegenüber den bekannten Verfahren reduziert.

Bei dem erfindungsgemäßen Verfahren können bei flächenhaften Werkstoffverbunden aus Pulverschichten mit einem Trägermaterial die Pulver oder Pulvermischungen zunächst auf das Trägermaterial dosiert aufgestreut, dort gleichmäßig verteilt und angepreßt, ggf. auch weiterverdichtet werden. Bei flächenhaften Werkstoffverbunden ohne Trägermaterial, also als selbsttragende Pulverformkörper, können die Pulver beispielsweise in den Spalt zwischen zwei horizontal nebeneinanderliegenden Walzen dosiert gestreut und das lose Pulver beim Passieren des Walzenspaltes zu einer flachen Schicht zusammengepreßt werden. In beiden Fällen haben die Pulverschichten in diesem Zustand nur eine relativ geringe mechanische Festigkeit, welche aber ausreicht, um die Pulverschichten während ihres Transports zur Induktionsschweißeinrichtung zusammenzuhalten.

Der Werkstoffverbund mit oder ohne Trägermaterial kann bspw. dem magnetischen Wechselfeld ausgesetzt werden, indem das Magnetfeld linienhaft fokussiert und eine ausreichend hohe Induktionsspannung erzeugt wird, um die erforderliche hohe Energiedichte zu erzielen, mit welcher das Verschweißen kurzzeitig erfolgen kann.

Dadurch, daß bei einer produktabhängigen Mindestpartikelgröße im Mikrometer-Bereich der Induktionsstrom mit so hoher Energiedichte und so kurzzeitig erzeugt wird, daß nur die Berührungsstellen der Pulverpartikel untereinander und, bei Vorhandensein eines Trägermaterials, auch nur ihre Berührungsstellen mit dem Trägermaterial bei einer Temperatur oberhalb der Sintertemperatur schmelzflüssig und verschweißt werden, ohne daß die Kernzonen der Pulverpartikel eine Temperatur erreichen, bei welcher sich die Eigenschaften der Pulverkomponenten verändern, werden nicht nur die Produktqualität verbessert sondern auch Investitions- und Energiekosten eingespart.

Dabei wird insbesondere angestrebt, daß der Induktionsstrom mit so hoher Energiedichte und so kurzzeitig erzeugt wird, daß die Kernzonen der Pulverpartikeln deren Sintertemperatur nicht erreichen.

Bei einer weiteren vorteilhaften Ausgestaltung des erfindungsgemäßen Verfahrens wird der Induktionsstrom mit so hoher Energiedichte und so kurzzeitig erzeugt, daß zwar die Berührungsstellen der Pulverpartikel untereinander und bei Vorhandensein eines Trägermaterials auch ihre Berührungsstellen mit dem Trägermaterial schmelzflüssig und verschweißt werden, die Porosität der Pulverschicht bzw. des Pulverformkörpers aber erhalten bleibt.

Das Pulver kann bei der Ausführung des erfindungsgemäßen Verfahrens außer der elektrisch leitenden Werkstoffkomponente noch mindestens eine weitere Werkstoffkomponente aufweisen, welche metallisch oder nicht metallisch sein kann.

Beispielsweise kann das Pulver elektrisch nichtleitende Werkstoffkomponenten aufweisen, sofern die elektrisch leitenden Werkstoffkomponenten ein zusammenhängendes Gerüst bilden, in welchem die nichtleitenden Werkstoffkomponenten eingelagert sind.

Als Trägermaterial werden bevorzugt Blechbänder oder -tafeln, Metallfolien, Hartpapier, Kunstharzfolien, jeweils mit oder ohne Perforation, Streckgitter, Drahtgewebe, Vliese oder dgl., jeweils mit oder ohne klebende Oberfläche, und nicht metallisches Trägermaterial jeweils mit und ohne metallisierte Oberfläche verwendet.

Es ist auch möglich, die erfindungsgemäß induktionsgeschweißten Werkstoffverbunde nachzuwalzen, um ihre Dicke zu reduzieren und/oder ihre Oberflächen zu glätten und/oder sie zu profilieren.

Ein weiterer Erfindungsmerkmal besteht darin, daß der Schweißvorgang in Gegenwart von ausgewählten Gasen, z.B. eines Schutzgases zur Oxidationsunterdrückung oder eines ionisierbaren Gases und dadurch in einem Plasma, abläuft.

Des weiteren kann der Schweißvorgang durch desoxidierende Mittel unterstützt werden.

Die Pulverschicht kann die Dicke von Millimetern, aber auch nur die Dicke weniger Atomlagen haben, wie dies bevorzugt bei teuren Edelmetall-Katalysatoren auf Trägerschichten angestrebt wird. Solch dünne Schichten können bspw. galvanisch erzeugt oder elektrostatisch oder aus einer Suspension abgeschieden oder aus einer Lösung ausgefällt oder als Schlamm oder Paste aufgetragen und dann getrocknet werden. In manchen Fällen wird die Schichthaftung durch Klebemittel unterstützt.

Weitere Ziele, Merkmale, Vorteile und Anwendungsmöglichkeiten der vorliegenden Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung und zwar unabhängig von ihrer Zusammenfassung in den einzelnen Ansprüchen oder deren Rückbeziehung.

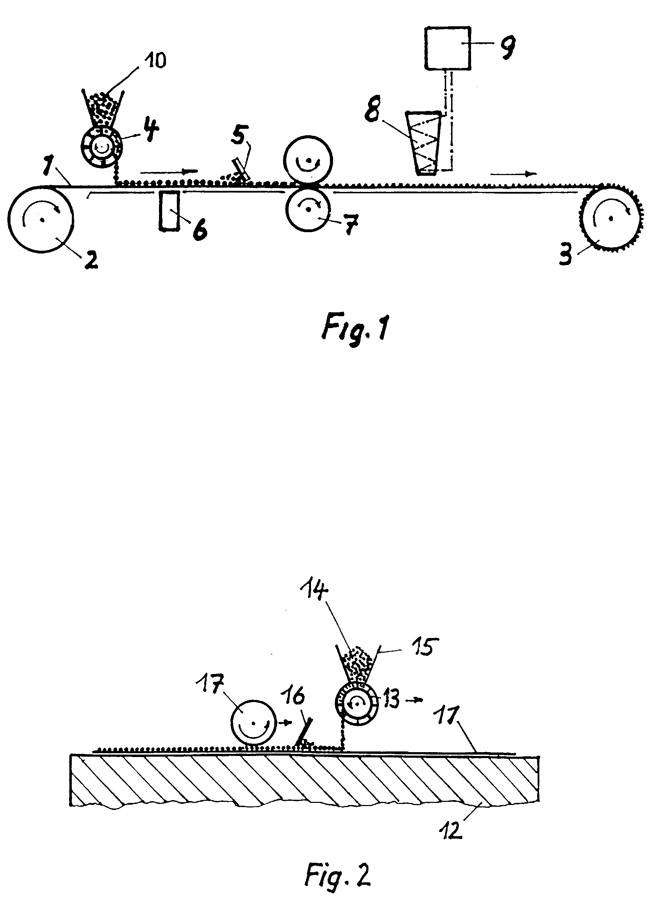

In den Fig. 1 bis 3 sind beispielhaft Ausführungsmöglichkeiten des erfindungsgemäßen Verfahrens veranschaulicht, bei welchen sich insbesondere die vorbereitenden Fertigungsschritte vor der induktiven Pulververschweißung unterscheiden.

Gemäß Fig. 1 erfolgt die Herstellung eines Flächenhaften, aufwickelbaren Werkstoffverbundes von Pulverschichten auf einem bandförmigen Trägermaterial.

Zu diesem Zweck wird als Trägermaterial ein aufgerautes oder profiliertes Trägerband 1 aus Blech von einer Spule 2 abgewickelt. Das Trägerband 1 durchläuft verschiedene Vorrichtungen zur Beschichtung des Trägerbandes 1 mit Pulver 10 und seiner Fixierung und wird von einer Spule 3 pulverbeschichtet wieder aufgewickelt.

Nach Ablauf des Trägerbandes 1 von der Spule 2 wird Pulver 10 bspw. über eine Zellradschleuse oder dgl. Dosiervorrichtung 4 auf das Trägerband 1 dosiert gestreut, durch eine Verteilervorrichtung 5, wie ein Rakel oder eine (nicht dargestellte) Verteilerwalze, auf dem Trägerband 1 gleichmäßig verteilt und angedrückt und ggf. zusätzlich durch ein gepulstes magnetisches Gleichfeld, das von einem Magneten oder Elektromagneten 6 erzeugt wird und vor oder hinter der Verteilervorrichtung 5 positioniert ist, verdichtet. Bei mehreren Pulverschichten übereinander folgt der Dosier- und der Verteilervorrichtung 4, 5 für die erste Pulverschicht eine zweite Dosier- und eine zweite Verteilervorrichtung. Ein solcher Fall kann bspw. eintreten, wenn die erste Pulverschicht als Haftvermittler für eine zweite, schlechter fixierbare Pulverschicht dienen soll.

Das pulverbeschichtete Trägerband 1 durchläuft nach der Verteilervorrichtung 5 ein Walzensatz 7, in welchem die Pulverschichten fest auf das Trägerband 1 aufgedrückt werden. Schließlich erfolgt die Induktionsschweißeinrichtung mit Induktor 8 und Generator 9, durch welche die Pulverfixierung erfolgt.

Als Trägermaterial für die Pulverschichten sind bei dieser Vorrichtung bspw. Bleche mit und ohne Perforierung, Folien, Streckgitter, Drahtgewebe oder Vliese aus beliebigem elektrisch leitfähigen Material geeignet. Glatte Bleche sollten vorteilhafterweise auf den pulvertragenden Flächen aufgeraut und/oder so profiliert sein, daß das auf das Trägerband 1 dosierte Pulver 10 auch bei schnellem Banddurchlauf, welcher zur Leistungssteigerung angestrebt wird, nicht durch die Verteilervorrichtung 5 weggeschoben wird. Vorteilhaft ist eine Quer- oder Diagonalriffelung des Trägerbandes 1.

Bei der Ausführungsmöglichkeit nach Fig. 2 erfolgt die Herstellung eines flächenhaften Werkstoffverbundes in Form einer Folie mit je einer Pulverschicht auf beiden Seiten des Trägerbandes 1. Zu diesem Zweck wird eine ebene Matte 11 aus feinmaschigem Drahtgewebe als Trägermaterial auf eine massive ebene Unterlage 12 gelegt und von einer Zellradschleuse oder dgl. Dosiervorrichtung 13, welche Pulver 14 aus einem Vorratsbehälter 15 auf die Matte 11 streut, überfahren. Eine mitlaufende Verteilervorrichtung 16 verteilt das Pulver 14 gleichmäßig über die Matte 11 und drückt es gleichzeitig leicht in deren Maschen. Eine ebenfalls mitlaufende Preßwalze 17 verdichtet den Verbund von Drahtgewebe und Pulver so, daß er leicht handhabbar wird und von einer Transport- und Hebevorrichtung aufgenommen, gewendet und mit der pulverbeschichteten Seite wieder auf die Unterlage 12 abgelegt werden kann. In dieser Position des bis dahin nur einseitig pulverbeschichteten Werkstoffverbundes kann - muß aber nicht - die zweite Seite der Matte 11 mit Pulver 14 in denselben Ablauf, wie für die erste Mattenseite beschrieben, beschichtet werden. Die nun beidseitig pulverbeschichtete Matte 11 aus Drahtgewebe wird nun von einer Transport- und Hebevorrichtung aufgenommen und entweder direkt der Induktionsschweißvorrichtung oder zunächst einem Walzgerüst für eine Nachverdichtung des Werkstoffverbundes und dann erst der Induktionsschweißvorrichtung zugeführt, in welcher die Pulververschweißung stattfindet.

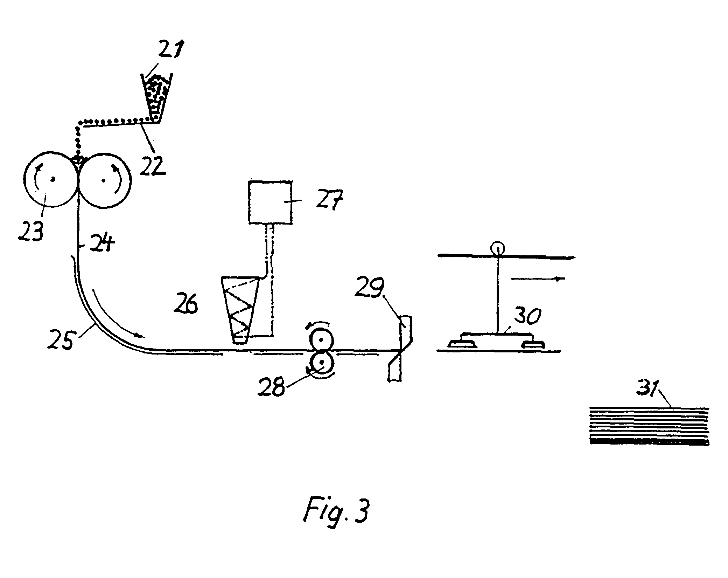

Bei dem in Fig. 3 dargestellten Ausführungsbeispiel erfolgt die Herstellung eines selbsttragenden Pulververbundes, also eines Pulverformkörpers ohne Trägermaterial.

Zu diesem Zweck läuft Pulver 21 mit einer oder mehreren Pulverkomponenten über eine Dosierrinne oder dgl. Dosiervorrichtung 22 von oben in einen Walzensatz 23 mit zwei horizontal nebeneinanderliegenden Walzen, zwischen welchen das Pulver 21 unter dem Druck der Walzen zu einem Pulverformkörper 24 verdichtet wird, dessen mechanische Festigkeit zum Transport auf einer Führungsrinne 25 zur Induktionsschweißeinrichtung mit Induktor 26 und Generator 27 ausreicht. Beim Durchlaufen der Induktionsschweißeinrichtung 26, 27 erfolgt die Verfestigung des Pulverformkörpers 24 zu einem gut zu handhabenden Produkt, das von einem Transportwalzenpaar geführt und aufgewickelt oder sonst von einer mitlaufenden Schneidmaschine 29 in Bandabschnitte gewünschter Länge geschnitten wird, welche schließlich mit einer Fördereinrichtung 30 auf einem Stapel 31 abgelegt werden.

Nach allen dargestellten erfindungsgemäßen Verfahren lassen sich alle Pulverwerkstoffe fixieren, welche der Bedingung der elektrischen Leitfähigkeit genügen, bspw. also nicht nur metallische Pulver, sondern ebenso oxidische und andere Metallverbindungen und Kohlenstoff und verschiedene Kohlenstoffverbindungen, bei deren induktiver Verschweißung fallweise die Schweißbedingungen durch Erzeugung eines Plasmas, also die Verschweißung in Gegenwart von ionisierbaren Gasen, begünstigt werden.

Bei allen dargestellten erfindungsgemäßen Verfahren lassen sich auch vorteilhafterweise zur Auflösung oxidischer Schichten auf den Oberflächen von Pulver und Trägermaterial Desoxidationsmittel einsetzen.

Bei allen dargestellten erfindungsgemäßen Verfahren verläuft der Arbeitsabschnitt der Induktionsschweißung in Bruchteilen einer Sekunde ab. Dadurch können alle Arbeitsabschnitte kostengünstig und schnell in einem Zug durchgeführt werden.

Es wird in vielen Fällen sinnvoll sein, das gemäß den Fig. 1 und 2 hergestellte Zwischenprodukt bspw. von 2,0 mm Dicke auf eine Enddicke von 0,2 mm oder weniger abzuwalzen - meist mit Zwischenglühen, welches ebenfalls induktiv unter Verwendung der Anlage, welche für das induktive Schweißen eingesetzt wird, lediglich mit einem modifizierten Induktor, erfolgen kann, um die mit dem Abwalzen steigende Materialhärte abzubauen. Dadurch lassen sich Endprodukte erzeugen, welche dem Zwischenprodukt in zweifacher Hinsicht überlegen sind: Sie sind erstens konstruktiv vielseitiger verwendbar, weil sie leicht verformbar und selbst in Federhärte als elastische, rückfedernde Bauelemente einsetzbar sind und zweitens bei teueren Werkstoffen im Vergleich zu dem dicken Zwischenprodukt kostengünstiger, wenn die Kosten auf die Flächeneinheit des Produktes bezogen werden, die bspw. für die Verwendung als Elektrode maßgebend ist.

### Ausführungsbeispiel:

Zur Herstellung einer Elektrode, welche als Kathode verwendet werden soll, wurde ein weichgeglühtes Nickelblech mit 99,2 % Ni mit einer Dicke von 1 mm und einer Breite von 50 mm durch Schleifen mit einer Bandschleifmaschine auf einer Seite aufgeraut, auf diese Seite dann eine Pulvermischung aus einem Teil einer Raney-Nickel-Legierung (mit einem Aluminium:Nickel-Verhältnis von 1:1 und einem Kornspektrum im Bereich von etwa 10 - 40µm ) und ein Teil Carbonyl-Nickel aufgestreut und mit einer rakelartigen Verteilervorrichtung gleichmäßig verteilt, so daß sich eine Pulver-Schichtdicke von 0,5 mm ergab. Durch Walzen wurde dann dieser Werkstoffverbund auf eine Gesamtdicke von 1,0 mm verdichtet.

Dieser Schichtverbund wurde schließlich durch ein mit einem Induktor in die Schicht fokusiertes magnetisches Wechselfeld mit einer Geschwindigkeit von 5 cm/s hindurchgezogen. Der Induktor wurde auf eine Ressonanzfrequenz von 60 kHz abgestimmt.

Die Pulverbeschichtung der so hergestellten Probe für den Einsatz als Kathode in einem Elektrolyseur hatte eine sehr gute Haftung an der Nickelblech-Unterlage und zeigte ein vorzügliches elektrochemisches Verhalten, das die hohe Aktivität des Raney-Nickel-Katalysators ohne thermische Schädigung nachweist. Das Kathodenpotential hatte, nach Aktivierung der Pulverschicht durch Herauslösen des Aluminiumanteils aus dem Raney-Nickel, bei einer Flächenbelastung von 2 kA/m² einen Wert von -975 mV, gemessen gegen eine Hg/HgO-Vergleichselektrode.

### Bezugszeichenliste

- 1: Trägerband
- 2: Spule
- 3: Spule
- 4: Zellradschleuse, Dosiervorrichtung
- 5: Rakel, Verteilerwalze, Verteilervorrichtung
- 6: Magnet, Elektromagnet
- 7: Walzensatz
- 8: Induktor
- 9: Generator
- 10: Pulver
- 11: Matte
- 12: Unterlage
- 13: Zellradschleuse, Dosiervorrichtung
- 14: Pulver
- 15: Vorratsbehälter
- 16: Verteilervorrichtung
- 17: Preßwalze

- 21: Pulver
- 22: Dosierrinne, Dosiervorrichtung
- 23: Walzensatz
- 24: Pulverformkörper
- 25: Führungsrinne
- 26: Induktor
- 27: Generator
- 28: Transportwalzenpaar
- 29: Schneidmaschine
- 30: Fördereinrichtung
- 31: Stapel

## Patentansprüche

1. Verfahren zur Herstellung von flächenhaften Werkstoffverbunden, wie Bändern, Folien oder Tafeln aus einem Trägermaterial und wenigstens einer darauf vorgesehenen und ggf. verdichteten elektrisch leitendenen Pulverschicht oder aus einem elektrisch leitenden flächenhaften elektrisch leitenden Pulverformkörper ohne Trägermaterial, wobei das Trägermaterial und die Pulverschicht bzw. der Pulverformkörper einem magnetischen Wechselfeld im Frequenzbereich von etwa 10 kHz bis 120 MHz ausgesetzt werden, um in der Pulverschicht bzw. dem Pulverformkörper einen Induktionsstrom solcher Energiedichte zu erzeugen, daß wenigstens die Berührungsstellen der Pulverpartikel untereinander und, bei Vorhandensein eines Trägermaterials, auch wenigstens ihre Berührungsstellen mit dem Trägermaterial bei einer Temperatur oberhalb der Sintertemperatur schmelzflüssig werden, **dadurch gekennzeichnet,** daß der Induktionsstrom mit so hoher Energiedichte und so kurzzeitig erzeugt wird, daß nur die Berührungsstellen der Pulverpartikel untereinander und, bei Vorhandensein eines Trägermaterials, auch nur ihre Berührungsstellen mit dem Trägermaterial bei einer Temperatur oberhalb der Sintertemperatur schmelzflüssig und verschweißt werden, ohne daß die Kernzonen der Pulverpartikel eine Temperatur erreichen, bei welcher sich die Eigenschaften der Pulverkomponenten verändern.

2. Verfahren nach Anspruch 1, **dadurch gekennzeichnet**, daß der Induktionsstrom mit so hoher Energiedichte und so kurzzeitig erzeugt wird, daß die Kernzonen der Pulverpartikel deren Sintertemperatur nicht erreichen.

3. Verfahren nach Anspruch 1 oder 2, **dadurch gekennzeichnet,** daß der Induktionsstrom mit so hoher Energiedichte und so kurzzeitig erzeugt wird, daß nur die Berührungsstellen der Pulverpartikel untereinander und, bei Vorhandensein eines Trägermaterials, auch nur ihre Berührungsstellen mit dem Trägermaterial bei einer Temperatur oberhalb der Sintertemperatur schmelzflüssig und verschweißt werden, eine Porosität der Pulverschicht bzw. des Pulverformkörpers aber erhalten bleibt.

4. Verfahren nach einem der Ansprüche 1 bis 3, **dadurch gekennzeichnet,** daß das Pulver außer der elektrisch leitenden Werkstoffkomponente noch mindestens eine weitere Werkstoffkomponente aufweist.

5. Verfahren nach einem der Ansprüche 1 bis 4, **dadurch gekennzeichnet,** daß das Pulver elektrisch nichtleitende Werkstoffkomponenten aufweist, sofern die elektrisch leitenden Werkstoffkomponenten ein zusammenhängendes Gerüst bilden, in welchem die nichtleitenden Werkstoffkomponenten eingelagert sind.

6. Verfahren nach einem der Ansprüche 1 bis 5, **dadurch gekennzeichnet,** daß als Trägermaterial Blechbänder oder -tafeln, Metallfolien, Hartpapier, Kunstharzfolien, jeweils mit oder ohne Perforation, Streckgitter, Drahtgewebe, Vliese oder dgl., jeweils mit oder ohne klebende Oberfläche, und nichtmetallisches Trägermaterial jeweils mit und ohne metallisierte Oberfläche, verwendet werden.

7. Verfahren nach einem der Ansprüche 1 bis 6, **dadurch gekennzeichnet,** daß die induktionsgeschweißten Werkstoffverbunde nachgewalzt werden, um ihre Dicke zu reduzieren und/oder ihre Oberfläche zu glätten und/oder zu profilieren.

8. Verfahren nach einem der Ansprüche 1 bis 7, **dadurch gekennzeichnet,** daß der Schweißvorgang in Gegenwart eines ausgewählten Gases, z.B. eines Schutzgases zur Oxidationsunterdrückung oder eines ionisierbaren Gases und dadurch in einem Plasma, ausgeführt wird.

9. Verfahren nach einem der Ansprüche 1 bis 8, **dadurch gekennzeichnet,** daß der Schweißvorgang durch desoxidierende Mittel unterstützt wird.

## Claims

1. A process for manufacturing laminar material composites, such as strips, foils or plates of a supporting material and at least one possibly compacted electrically conductive powder layer provided thereon, or of an electrically conductive laminar electrically conductive [sic] powder moulded body without a supporting material, the supporting material and the powder layer or the powder moulded body being exposed to a magnetic alternating field in the frequency range of approximately 10 kHz to 120 MHz in order to generate an induced current in the powder layer or the powder moulded body, the energy density of said current being such that at least the mutual contact points of the powder particles and, if a supporting material is present, also at least their contact points with the supporting material become molten at a temperature above the sintering temperature, characterized in that the induced current is generated with so high an energy density and so briefly that only the mutual contact points of the powder particles and, if a supporting material is present, also only their contact points with the supporting material become molten at a temperature above the sintering temperature and are welded without the core zones of the powder particles reaching a temperature at which the properties of the powder components are altered.

2. A process according to Claim 1, characterized in that the induced current is generated with so high an energy density and so briefly that the core zones of the powder particles do not reach their sintering temperature.

3. A process according to Claim 1 or 2, characterized in that the induced current is generated with so high an energy density and so briefly that only the mutual contact points of the powder particles and, if a supporting material is present, also only their contact points with the supporting material become molten at a temperature above the sintering temperature and are welded, the powder layer or the powder moulded body, however, remaining porous.

4. A process according to one of Claims 1 to 3, characterized in that, in addition to the electrically conductive material component, the powder has at least one further material component.

5. A process according to one of Claims 1 to 4, characterized in that the powder has material components which are not electrically conductive, provided the electrically conductive material components form a coherent framework in which the non-conductive material components are borne.

6. A process according to one of Claims 1 to 5, characterized in that sheet-metal strips or plates, metal foils, laminated paper, synthetic-resin foils, in each case with or without perforations, rib mesh, wire fabric, fleeces or the like, in each case with or without an adhesive surface, and non-metallic supporting material, in each case with and without a metal-plated surface, are used as the supporting material.

7. A process according to one of Claims 1 to 6, characterized in that the induction-welded material composites are re-rolled in order to reduce their thickness and/or smooth and/or profile their surface.

8. A process according to one of Claims 1 to 7, characterized in that the welding procedure is carried out in the presence of a selected gas, for example a protective gas for preventing oxidation or an ionisable gas, and therefore in a plasma.

9. A process according to one of Claims 1 to 8, characterized in that deoxidising agents are used in the welding procedure.

## Revendications

1. Procédé de production de matériaux composites laminaires, tels que des bandes, des feuilles ou des plaques, composés d'un matériau support et d'au moins une couche de poudre électro-conductrice éventuellement compactée rapportée sur ledit matériau support, ou composés d'une ébauche de frittage électro-conductrice bidimensionnelle sans matériau support, le matériau support et la couche de poudre ou l'ébauche de frittage étant exposés à un champ magnétique alternatif situé dans la plage de fréquences comprise entre environ 10kHz et 120 MHz, pour générer dans la couche de poudre ou l'ébauche de frittage un courant induit d'une densité d'énergie telle qu'au moins les points de contact des particules de poudre entre elles et également, en présence d'un matériau support, au moins les points de contact desdites particules de poudre avec ledit matériau support entrent en fusion à une température supérieure à la température de frittage, caractérisé en ce que le courant induit est généré avec une densité d'énergie si élevée et pendant un laps de temps si court que seuls les points de contact des particules de poudre entre elles et également, en présence d'un matériau support, seuls les points de contact desdites particules de poudre avec ledit matériau support entrent en fusion et se soudent à une température supérieure à la température de frittage, sans que les zones centrales des particules de poudre n'atteignent une température affectant les propriétés des composants de ladite poudre.

2. Procédé selon la revendication 1, caractérisé en ce que le courant induit est généré avec une densité d'énergie si élevée et pendant un laps de temps si court que les zones centrales des particules de poudre n'atteignent pas la température de frittage de ladite poudre.

3. Procédé selon la revendication 1 ou 2, caractérisé en ce que le courant induit est généré avec une densité d'énergie si élevée et pendant un laps de temps si court que seuls les points de contact des particules de poudre entre elles et également, en présence d'un matériau support, seuls les points de contact desdites particules de poudre avec ledit matériau support entrent en fusion et se soudent à une température supérieure à la température de frittage, tout en conservant une certaine porosité de la couche de poudre ou de l'ébauche de frittage.

4. Procédé selon l'une des revendications 1 à 3, caractérisé en ce que la poudre contient également, outre les composants électro-conducteurs, au moins un autre composant.

5. Procédé selon l'une des revendications 1 à 4, caractérisé en ce que la poudre contient des composants non-conducteurs d'électricité, dans la mesure où les composants électro-conducteurs forment une structure cohérente, dans laquelle sont incorporés les composants non-conducteurs d'électricité.

6. Procédé selon l'une des revendications 1 à 5, caractérisé en ce qu'il met en oeuvre, comme matériau support, des bandes ou des plaques de tôle, des feuilles de métal, du papier durci, des feuilles de résine synthétique, avec ou sans perforations, du métal déployé, du tissu métallique, des mats ou similaires, avec ou sans surface adhésive, et un matériau support non métallique avec et sans surface métallisée.

7. Procédé selon l'une des revendications 1 à 6, caractérisé en ce que le matériau composite soudé par induction est soumis à un laminage postérieur pour réduire son épaisseur et/ou polir et/ou profiler sa surface.

8. Procédé selon l'une des revendications 1 à 7, caractérisé en ce que l'opération de soudage est effectuée en présence d'un gaz sélectionné, par exemple un gaz protecteur pour empêcher l'oxydation, ou un gaz ionisable et se déroule de ce fait dans un plasma.

9. Procédé selon l'une des revendications 1 à 8, caractérisé en ce que l'opération de soudage est soutenue par des moyens désoxydants.
